# FASCICULE DE BREVET EUROPEEN

(11) **EP 2 038 797 B1**
(45) Date de publication et mention de la délivrance du brevet: **19.09.2012**
(21) Numéro de dépôt: 07803977.3
(22) Date de dépôt: 29.06.2007
(51) Int. Cl.: H04L 29/08, H04L 29/06, G06F 21/00, H04L 12/24

(54) **UNITE ET PROCEDE DE GESTION D'AU MOINS UN CANAL DANS UNE SESSION D'ACCES A UN SERVICE DANS UN RESEAU**
EINHEIT UND VERFAHREN ZUR VERWALTUNG VON MINDESTENS EINEM KANAL IN EINER ZUGRIFFSSITZUNG FÜR DEN ZUGRIFF AUF EINEN DIENST IN EINEM NETZ
UNIT AND METHOD FOR MANAGING AT LEAST ONE CHANNEL IN AN ACCESS SESSION FOR ACCESSING A SERVICE IN A NETWORK

(30) Priorité: 03.07.2006 FR 0652777
(43) Date de publication de la demande: 25.03.2009
(73) Titulaire: FRANCE TELECOM, 75015 Paris (FR)
(72) Inventeur: GYSS, Jean-François, F-22300 Rospez (FR); PAILLET, Eric, F-22730 Tregastel (FR); TEZE, Vincent, F-29870 Landeda (FR)
(74) Mandataire: Delumeau, François Guy
(86) Numéro de dépôt international: PCT/FR2007/051570
(87) Numéro de publication internationale: WO 2008/003892

(56) Documents cités:
- WO-A2-03/056859
- US-A1- 2006 090 198

## Description

### Arrière-plan de l'invention

L'invention se situe dans le domaine des services interactifs dans un réseau de télécommunications.

De façon privilégiée mais non limitative, l'invention se situe plus particulièrement dans le domaine de services multimodaux interactifs.

D'une façon générale, nous définirons la "multimodalité" comme l'utilisation de plusieurs modalités de manière alternée ou parallèle, de façon combinée ou redondante.

Du point de vue système, une modalité, qu'elle soit d'entrée ou de sortie, se définit par :
- un système représentationnel ;
- un dispositif physique d'interaction ; ou par
- l'association d'un système représentationnel et d'un dispositif physique d'interaction.

A titre d'exemple non limitatif, l'invention s'applique à des services interactifs accessibles par au moins une de ces modalités :
- téléphonie fixe ;
- téléphonie mobile ;
- téléphonie I P (Internet Protocol) ;
- accès Internet ;
- vidéo.

Il est connu qu'un utilisateur (personne physique ou dispositif) accède à un service au cours d'une session, liée à cet utilisateur, pendant laquelle sont établis un ou plusieurs canaux.

De façon connue, une session établie entre deux entités est contrôlée (établie, maintenue, rompue, ...) par des moyens de contrôle répartis dans ces entités.

Dans ce document, les données gérées par au moins un de ces moyens de contrôle de session sont dites « rattachées » à la session.

Document US 2006/090198 montre u, systéme de securité parametrable par l'utilisateur.

Un canal de communication entre deux entités est défini par un flux de données utiles (voix, vidéo, ...), les moyens de contrôle de ce flux répartis dans les deux entités. Les données gérées par au moins un de ces moyens de contrôle de canal sont dites « rattachées » au canal.

On dira également qu'une donnée rattachée à une première session ou à un premier canal est « visible » d'une deuxième session ou d'un deuxième canal si les moyens de contrôle de cette deuxième session ou de ce deuxième canal ont connaissance de l'existence de cette donnée. Elle est dite « invisible » dans le cas contraire.

Enfin lorsqu'une donnée est visible, elle peut l'être :
- en « lecture » : si sa valeur peut être seulement obtenue ; ou
- en « lecture/écriture» si sa valeur peut être modifiée.

Par ailleurs, notamment dans le cadre des services multimodaux, il peut se produire qu'un ou plusieurs utilisateurs accèdent à un même service avec plusieurs sessions, chacune de ces sessions comportant un ou plusieurs canaux.

Par exemple, un utilisateur peut accéder à un serveur via un canal vocal appartenant à une première session établie entre ce serveur et un téléphone mobile de cet utilisateur et, simultanément, via un canal vidéo appartenant à une deuxième session avec un ordinateur de ce même utilisateur.

A ce jour, le déploiement des services multimodaux reste limité, du fait qu'il n'est pas possible, dans l'état actuel de la technique, de partager des informations entre ces différents canaux, cette étanchéité relative empêchant d'assurer une cohérence globale du service.

### Objet et résumé de l'invention

Selon un premier aspect, l'invention concerne une unité de gestion d'au moins un canal appartenant à une session d'accès à un service dans un réseau de télécommunications, cette unité de gestion comportant :
- des moyens pour enregistrer un attribut de visibilité associé audit au moins un canal;
- des moyens pour recevoir une requête pour obtenir des informations sur un canal; et
- des moyens pour envoyer une réponse à cette requête, en prenant en compte l'attribut de visibilité associé à ce canal.

L'unité de gestion selon l'invention permet donc de définir et d'enregistrer un attribut de visibilité associé à chacun des canaux utilisés pour accéder à un service.

Dans un mode particulier de réalisation de l'invention, les différents attributs de visibilité qui peuvent être associés à un canal sont les suivants :
- "public", un canal public étant visible par tous les autres canaux ;
- " protégé", un canal protégé étant visible par tous les autres canaux de la session de ce canal; et
- "privé", un canal privé n'étant visible par aucun autre canal.

Conformément à l'invention, lorsque l'unité de gestion reçoit une requête pour obtenir des informations sur un canal, elle prépare une réponse en prenant en compte l'attribut de visibilité associé au canal.

Par exemple, lorsque l'unité de gestion reçoit une requête pour obtenir la liste des canaux visibles, elle retourne, en réponse à cette requête, la liste des références des canaux publics.

Et si aucun canal n'est public, l'unité de gestion selon l'invention retourne une information (NULL) représentative de cet état de fait.

Dans un mode de réalisation de l'invention, si la requête pour obtenir des informations sur un premier canal provient d'un deuxième canal, la réponse prend en compte les sessions auxquelles appartiennent ces premier et deuxième canaux.

Par exemple, l'unité de gestion selon l'invention retourne des informations sur un canal protégé uniquement en réponse aux requêtes provenant d'un canal appartenant à la même session que ce canal.

L'invention s'applique également lorsqu'au moins deux sessions permettent d'accéder au même service.

Dans un mode particulier de réalisation de l'invention, l'unité de gestion comporte :
- des moyens pour enregistrer un attribut de visibilité associé à une session ;
- des moyens pour recevoir une requête pour obtenir des informations sur une session ; et
- des moyens pour envoyer une réponse à cette requête, en prenant en compte l'attribut de visibilité associé à la session.

Dans un mode particulier de réalisation, on offre en outre une visibilité sur les sessions.

Dans un mode particulier de réalisation, l'attribut de visibilité d'une session peut être de deux types :
- "public", une session publique étant visible par toutes les sessions ; et
- "privé", une session privée n'étant visible que par les canaux de cette session.

Dans un mode particulier de réalisation de l'invention, l'unité de gestion prend en compte, pour répondre à une requête d'obtention d'information sur un canal l'attribut de visibilité de la session à laquelle appartient ce canal et un ensemble de règles.

Cet ensemble de règles définit en quelque sorte la prévalence entre l'attribut de visibilité associé à une session et l'attribut de visibilité associé à un canal de cette session.

Cet ensemble de règles permet notamment de lever les conflits de visibilité quand un canal protégé ou public appartient à une session privée.

Dans un mode particulier de réalisation de l'invention, l'unité de gestion comporte :
- des moyens pour enregistrer un attribut de visibilité associé à au moins une donnée ;
- des moyens pour recevoir une requête pour obtenir des informations sur une donnée ; et
- des moyens pour envoyer une réponse à cette requête, en prenant en compte l'attribut de visibilité associé à la donnée.

Ce mode particulier de réalisation permet d'attribuer un attribut de visibilité aux données utilisées dans le cadre d'un service.

Dans un mode particulier de réalisation de l'invention, les différents attributs de visibilité qui peuvent être associés à une donnée sont les suivants :
- "public", une donnée publique étant est visible par toutes les sessions ;
- "protégé", une donnée protégée n'étant visible que par les canaux de la même session ; et
- "privée", une donnée privée n'étant visible ni par les autres sessions, ni par les autres canaux de cette session.

Dans un mode particulier de réalisation de l'invention, l'unité de gestion comporte en outre :
- des moyens pour enregistrer un droit de lecture et/ou écriture associé à au moins une donnée ;
- des moyens pour recevoir une requête pour lire ou modifier une donnée; et
- des moyens pour envoyer une réponse à cette requête, en prenant en compte le droit et l'attribut de visibilité associés à cette donnée.

Comme mentionné précédemment, une donnée peut être rattachée à un canal ou directement rattachée à une session.

Dans un mode particulier de réalisation, lorsqu'un tiers émet une requête pour accéder à une donnée rattachée à un canal, l'unité de gestion selon l'invention prend en compte, pour répondre à cette requête, l'attribut de visibilité de ce canal et un ensemble de règles.

Cet ensemble de règles permet notamment de lever les conflits de visibilité lorsqu'une donnée publique est rattachée à un canal protégé ou privé.

Dans un mode particulier de réalisation de l'invention, lorsqu'une donnée est rattachée à une session, l'unité de gestion prend en compte l'attribut de visibilité de cette session et un ensemble de règles.

Cet ensemble de règles permet notamment de lever les conflits de visibilité lorsqu'une donnée publique ou protégée appartient à une session privée.

Dans un mode de réalisation particulier, l'unité de gestion selon l'invention prend en compte, pour répondre à une requête pour obtenir des informations sur une donnée, la session à laquelle est rattachée cette donnée et la session d'où provient cette requête.

Ce mode de réalisation permet ainsi de limiter la fourniture d'informations sur une donnée protégée en réponse aux seules requêtes provenant d'un canal appartenant à la même session.

L'invention concerne également un procédé de gestion d'au moins un canal appartenant à une session d'accès à un service dans un réseau de télécommunications

Ce procédé de gestion comporte :
- une étape d'enregistrement d'un attribut de visibilité associé à ce canal ;
- une étape de réception d'une requête pour obtenir des informations sur un canal ; et
- une étape d'envoi d'une réponse à la requête, en prenant en compte l'attribut de visibilité associé au canal.

Les avantages et modes particuliers de réalisation du procédé de gestion selon l'invention sont identiques à ceux mentionnés précédemment en référence au dispositif de gestion selon l'invention. Ils ne seront pas rappelés ici.

Dans un mode particulier de réalisation, les différentes étapes du procédé de gestion sont déterminées par des instructions de programmes d'ordinateurs.

En conséquence, l'invention vise aussi un programme d'ordinateur sur un support d'informations, ce programme étant susceptible d'être mis en oeuvre dans une unité de gestion ou plus généralement dans un ordinateur, ce programme comportant des instructions adaptées à la mise en oeuvre des étapes d'un procédé de gestion tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, dans son environnement, une unité de gestion conforme à l'invention dans un mode particulier de réalisation ;
- la figure 2 représente, sous forme d'organigramme, les principales étapes d'un procédé de gestion conforme à l'invention dans un mode particulier de réalisation ;
- la figure 3 représente des tables qui définissent des règles pour résoudre des conflits de visibilité dans un mode particulier de réalisation de l'invention ; et
- la figure 4 représente de façon schématique un exemple d'utilisation de l'invention.

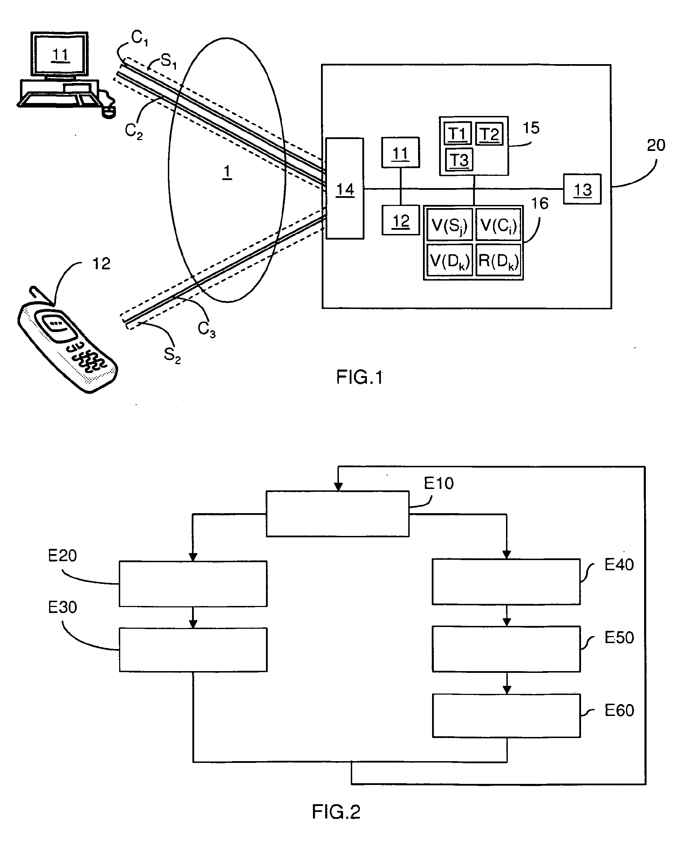

La figure 1 représente une unité de gestion 20 conforme à l'invention.

Dans l'exemple décrit ici, cette unité de gestion est incorporée dans un serveur portant la même référence.

Cette unité de gestion a l'architecture matérielle d'un ordinateur conventionnel.

Elle comporte un processeur 11, une mémoire vive de type RAM 12, une mémoire morte de type ROM 13 et des moyens de communication 14 pour communiquer avec un autre équipement via un réseau 1.

La mémoire morte 13 comporte un programme d'ordinateur dont les instructions permettent de mettre en oeuvre les étapes du procédé de gestion conforme à l'invention dont l'organigramme est donné à la figure 2.

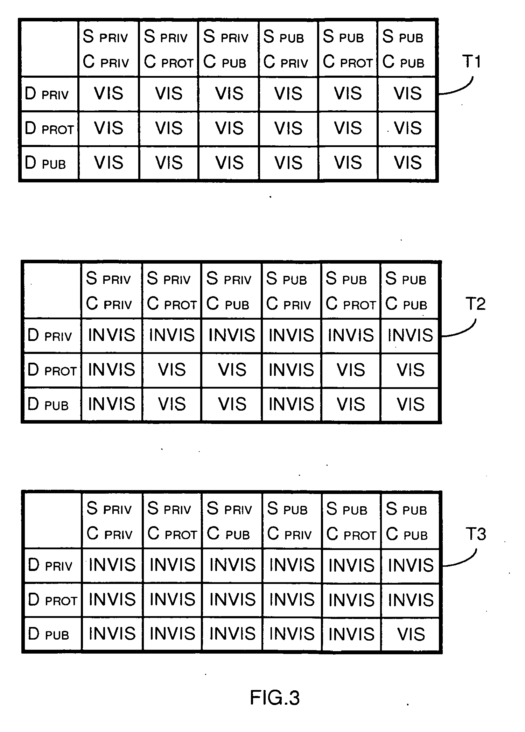

L'unité 20 de gestion selon l'invention comporte une unité de stockage 15 qui comporte trois tables de règles T1, T2 et T3 représentées à la figure 3.

L'unité de gestion 20 selon l'invention comporte également une mémoire non volatile réinscriptible 16 qui mémorise :
- des attributs de visibilité V(Sⱼ) sur des sessions Sⱼ;
- des attributs de visibilité V(Cᵢ) sur des canaux Cᵢ;
- des attributs de visibilité V(Dₖ) sur des données Dₖ ; et
- des droits R(Dₖ) sur les données Dₖ.

Dans l'exemple décrit ici, l'attribut V(Sⱼ) d'une session Sⱼ peut être de deux types :
- "public" (PUB), auquel cas la session Sⱼ est visible par les autres sessions qui peuvent consulter les données qui s'y rattachent ; et
- "privé" (PRIV), auquel cas la session Sⱼ et les données rattachées à cette session ne sont pas visibles par les autres sessions.

Dans l'exemple décrit ici, les attributs de visibilité V(Cᵢ) d'un canal Cᵢ peuvent être de trois types, à savoir :
- "public" (PUB), auquel cas le canal Cᵢ est visible par toutes les autres sessions ;
- "protégé" (PROT), auquel cas le canal Cᵢ est visible par les canaux de la même session que ce canal ; et
- "privé" (PRIV), auquel cas le canal n'est visible ni par les autres sessions, ni par les autres canaux de la même session.

Dans l'exemple décrit ici, les attributs de visibilité V(Dₖ) des données Dₖ peuvent être de trois types, à savoir :
- "public" (PUB), auquel cas la donnée est visible par toutes les autres sessions ;
- "protégé" (PROT), auquel cas la donnée n'est visible que par les canaux de la même session; et
- "privé" (PRIV), auquel cas la donnée n'est visible ni par les autres sessions, ni par les autres canaux de la même session.

Les trois tables T1, T2 et T3 mémorisées dans l'unité de stockage 15 définissent des règles qui permettent de lever les conflits entre :
- l'attribut de visibilité V(Sⱼ) d'une session Sⱼ ;
- l'attribut de visibilité V(Cᵢ) d'un canal Cᵢ de cette session Sⱼ ; et
- l'attribut de visibilité V(Dₖ) d'une donnée Dₖ rattachée au canal Cᵢ ou à la session Sⱼ.

Dans l'exemple particulier décrit ici, on considère qu'il est nécessaire :
- qu'une session Sⱼ soit visible pour que les canaux Cᵢ de cette session soient eux-mêmes visibles ; et
- qu'un canal Cⱼ soit lui-même visible pour que les données Dₖ rattachées à ce canal soient visibles.

On suppose qu'un utilisateur accède à un même service du serveur 20 par deux terminaux, à savoir un ordinateur personnel 11 et un téléphone mobile 12, via le réseau de télécommunications 1. Plus précisément, on considère dans cet exemple :
- qu'une première session S₁ est établie entre l'ordinateur 11 et le serveur 20, cette première session S₁ comportant un canal vocal C₁ et un canal visuel C₂ ;
- et qu'une deuxième session S₂ est établie entre le téléphone mobile 12 et le serveur 20, cette deuxième session comportant uniquement un canal vocal référencé C₃.

La table T1 comporte des règles utilisées par l'unité de gestion 20 pour résoudre un conflit de visibilité qui se présente quand :
- on accède à une donnée rattachée à une session Sⱼ depuis cette même session Sⱼ ; ou quand
- on accède à une donnée rattachée à un canal Cᵢ depuis ce même canal Cᵢ.

La table T2 comporte des règles utilisées par l'unité de gestion 20 pour résoudre un conflit de visibilité qui se présente lorsque l'on souhaite accéder à une donnée rattachée à un premier canal par un deuxième canal de la même session.

La table T3 comporte des règles utilisées par l'unité de gestion 20 pour résoudre un conflit de visibilité lorsque l'on souhaite accéder à une donnée, quelle soit rattachée à une session ou à un canal, depuis une autre session.

Dans chacune de ces tables, on note :
- "VIS' si la donnée Dₖ peut être rendue visible en fonction des attributs de visibilité V(Sⱼ), V(Cᵢ) et V(Dₖ) ; et
- "INVIS" si cette donnée doit rester invisible.

La lecture de la table T1 nous indique que dans ce mode de réalisation, une donnée rattachée à une session est toujours visible de cette session, et qu'une donnée rattachée à un canal est toujours visible de ce canal.

La lecture de la table T2 nous indique qu'une donnée privée rattachée à un canal est invisible pour tous les autres canaux de la même session et qu'une donnée rattachée à un canal privé est invisible depuis les autres canaux de la même session, même si cette donnée est publique.

La table T3 nous indique que, pour qu'une donnée soit visible depuis une autre session, il est nécessaire que le canal et la session à laquelle appartient cette donnée soient publics.

Nous allons maintenant décrire, en référence à la figure 2, les principales étapes du procédé de gestion mis en oeuvre par l'unité de gestion 20.

Dans la suite de la description, le terme "objet" désigne indifféremment une session, un canal ou une donnée.

D'un point de vue général, le procédé de gestion selon l'invention est constitué par une boucle E10 à E60 de traitement de requêtes.

L'étape E10 correspond à la réception de ces requêtes.

Ces requêtes peuvent être de différents types :
- des requêtes pour enregistrer un objet, ces requêtes d'enregistrement comportant un attribut de visibilité associé à cet objet. Sur réception d'une requête d'enregistrement d'un objet non enregistré, l'unité de gestion 20 mémorise l'attribut de visibilité dans la mémoire non volatile 16 ;
- des requêtes de déréférencement, pour supprimer un objet de la mémoire non volatile 16 ;
- des requêtes pour obtenir la liste des références d'objets publics ;
- des requêtes pour modifier l'attribut de visibilité d'un objet, ces requêtes n'étant prises en compte par l'unité de gestion 20 que si elles proviennent de la session à laquelle appartient cet objet ;
- des requêtes pour modifier les informations associées à un objet public ;
- des requêtes pour obtenir des informations sur un objet public.

Lorsque la requête reçue à l'étape E10 est une requête d'enregistrement ou de déréférencement, l'étape E10 est suivie par une étape E20 au cours de laquelle l'unité de gestion 20 enregistre ou supprime la référence d'un objet ainsi que les attributs de visibilité de cet objet dans la mémoire non volatile 16.

Cette étape d'enregistrement E20 ou de déréférencement est suivie par une étape E30 au cours de laquelle l'unité de gestion 20 envoie une réponse à la requête reçue à l'étape E10, cette réponse comportant soit la référence de l'objet, soit une valeur NULL si une erreur s'est produite.

Une erreur peut notamment se produire lorsqu'une requête d'enregistrement ou de déréférencement d'un canal est reçue d'une session autre que celle à laquelle appartient ce canal.

Cette étape E30 d'envoi d'une réponse est suivie par l'étape E10 de réception de la prochaine requête.

Lorsque l'unité de gestion 20 selon l'invention reçoit une requête pour obtenir ou modifier des informations sur un objet, l'étape E10 de réception de requête est suivie par une étape E40 d'obtention d'au moins un critère de visibilité.

Si la requête vise une session Sⱼ, on obtient, au cours de cette étape, l'attribut de visibilité V(Sⱼ) de cette session depuis la mémoire non volatile 16.

Si cette requête vise un canal Cᵢ, on obtient, depuis la mémoire non volatile 16, l'attribut de visibilité V(Cᵢ) de ce canal et l'attribut de visibilité V(Sⱼ) de la session à laquelle appartient de canal.

Si la requête vise une donnée Dₖ, on obtient de la mémoire non volatile 16, l'attribut de visibilité V(Dₖ) de cette donnée, le cas échéant l'attribut de visibilité V(Cᵢ) du canal auquel est rattachée cette donnée, et le cas échéant, l'attribut de visibilité V(Sⱼ) de la session à laquelle est rattachée cette donnée.

L'étape E40 d'obtention des critères de visibilité est suivie par une étape E50 de gestion des conflits de visibilité.

Dans l'exemple décrit ici, lorsque cette requête vise une donnée, cette étape de gestion des conflits consiste à obtenir, à partir des tables T1 à T3, la valeur "VIS" ou "INVIS".

Si l'unité de gestion 20 obtient la valeur "INVIS", la constante NULL est renvoyée en réponse à la requête pour représenter le fait que la donnée est invisible et que les informations demandées ne sont pas accessibles.

En revanche, si la valeur "VIS' est obtenue, c'est-à-dire si la donnée recherchée Dₖ est visible, la réponse à la requête dépend des droits R(Dₖ) associés à cette donnée.

Plus précisément, si ces droits sont des droits de lecture, la donnée Dₖ peut simplement être lue.

Et si ces droits sont des droits d'écriture, la donnée Dₖ peut également être modifiée.

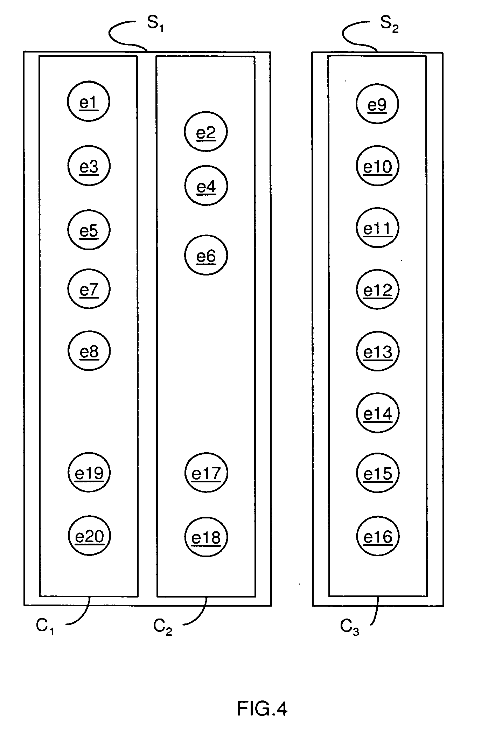

En référence à la figure 4, nous allons maintenant décrire un scénario conforme à l'invention pour gérer les canaux C₁, C₂, C₃ établis par l'ordinateur 11 et le téléphone mobile 12 pour accéder au serveur 20 de la figure 1.

Au cours d'une étape e1, la modalité vocale de l'ordinateur 11 demande le référencement de la session S₁ par l'envoi d'une requête de référencement.

Cette requête de référencement est reçue au cours de l'étape E10. Comme la session S₁ n'est pas connue de l'unité de gestion 20, une référence Ref S₁ est créée (étape E20) et retournée (étape E30) à l'ordinateur personnel 11 dans le canal C₁.

Au cours d'une étape e2, la modalité visuelle de l'ordinateur 11 demande le référencement de la session S₁. Comme cette session est enregistrée dans la mémoire volatile 16, la référence Ref S₁ de cette session est retournée à l'ordinateur 11 via le canal C₂.

Au cours d'une étape e3, la modalité vocale de l'ordinateur 11 demande le référencement du canal C₁ dans l'unité de gestion 20.

La référence Ref C₁ est créée (étape E20) et retournée à l'ordinateur personnel 11 via le canal C₁.

Au cours d'une étape e4, la modalité vocale de l'ordinateur 11 demande le référencement du canal visuel C₂. La référence Ref C₂ est créée et retournée à l'ordinateur 11 via le canal C₂.

Au cours d'une étape e5, la modalité vocale de l'ordinateur 11 enregistre la donnée A (donnée de niveau session rattachée à la session S₁).

Au cours d'une étape e6, la modalité visuelle de l'ordinateur 11 enregistre la donnée B, donnée rattachée au canal visuel C₂.

Au cours d'une étape e7, la modalité vocale de l'ordinateur 11 obtient la liste des canaux visibles de la session S₁ auprès de l'unité de gestion 20.

Au cours d'une étape e8, la modalité vocale de l'ordinateur 11 accède à la donnée B rattachée au canal C₂, en supposant que la modalité vocale de l'ordinateur 11 a les droits de lecture sur cette donnée.

Au cours d'une étape e9, la modalité vocale du téléphone mobile 12 demande le référencement de la session S₂. Comme S₂ n'est pas référencé dans l'unité de gestion 20, une référence Ref S₂ est créée et retournée au téléphone mobile 12 via le canal C₃.

Au cours d'une étape e10, la modalité vocale de l'ordinateur 11 demande le référencement du canal C₃. La référence Ref C₃ est créée et retournée à la modalité vocale du téléphone mobile 12 via le canal C₃.

Au cours d'une étape e11, la modalité vocale du terminal mobile 12 obtient la liste des sessions visibles auprès de l'unité de gestion 20.

Au cours d'une étape e12, la modalité vocale du terminal mobile 12 accède à la donnée A de la session S₁ en supposant que cette modalité vocale a les droits de lecture sur cette donnée.

Au cours d'une étape e13, la modalité vocale du terminal mobile 12 récupère la liste des canaux visibles de la session S₁ auprès de l'unité de gestion 20.

Au cours d'une étape e14, la modalité vocale du terminal mobile 12 accède à la donnée B rattachée au canal C₂ en supposant que cette modalité vocale a les droits de lecture sur cette donnée.

Au cours d'une étape e15, la modalité vocale du terminal mobile 12 demande le déréférencement du canal C₃.

La référence Ref C₃ est supprimée de la mémoire non volatile 16.

Au cours d'une étape e16, la modalité vocale du terminal mobile 12 demande le déférencement de la session S₂.

La référence RefS₂ est supprimée de la mémoire non volatile 16.

Au cours d'une étape e17, la modalité visuelle de l'ordinateur 11 demande le déférencement du canal C₂.

La référence RefC₂ est supprimée.

Au cours d'une étape e18, la modalité visuelle de l'ordinateur 11 demande le déférencement de la session S₁.

Comme la référence RefS₁ est également utilisée par la modalité vocale de l'ordinateur 11, elle n'est pas supprimée de la mémoire non volatile 16.

Au cours d'une étape e19, la modalité vocale de l'ordinateur 11 demande le déférencement du canal vocal C₁.

La référence RefC₁ est supprimée.

Au cours d'une étape e20, la modalité vocale de l'ordinateur 11 demande le déférencement de la session S₁.

Comme la référence RefS₁ n'est plus utilisée par aucune modalité, elle est supprimée du registre de sessions.

Dans l'exemple de réalisation décrit ici, le procédé de gestion de l'organigramme donné à la figure 2 s'appuie sur un ensemble de fonctions spécifiées ci-après.

Les instructions de chacune de ces fonctions sont mémorisées dans la mémoire non volatile 13 de type ROM de l'unité 20 conforme à l'invention.

### A) Fonctionnalités de niveau session.

### 1) Enregistrement d'une session :

La fonction « registerSession » permet d'enregistrer une session. Elle comporte les paramètres suivants :

| Paramètre | Type | Commentaire | |
|---|---|---|---|
| idUser | Paramètre obligatoire | Identifiant de la session | |
| Visibilité | Paramètre obligatoire | Visibilité donnée sur la session Valeurs possibles : | |
| | | | PUB : la session est visible par toutes les autres sessions ; |
| | | | PRIV : la session n'est visible que par les canaux d'une même session. |
| | Valeur de retour | Si la session est nouvelle, la valeur de retour est la référence sur cette nouvelle session enregistrée. | |
| | | Si la session existe déjà (c'est-à-dire que l'idUser passé en paramètre est le même), la valeur de retour est la référence sur cette session existante. | |
| | | Si une erreur est rencontrée, la valeur de retour est "NULL". | |

### 2) Obtention de la liste des sessions visibles

La fonction « getListSession » permet de récupérer la liste des références des sessions enregistrées avec une visibilité de type « publique ».

| Paramètre | Type | Commentaire |
|---|---|---|
| | Valeur de retour | Liste de références sur les sessions ayant une visibilité de type "PUB". |
| | | Si une erreur est rencontrée, la valeur de retour est "NULL". |

### 3) Mise à jour de la visibilité d'une session

La fonction « setSessionScope » permet de mettre à jour la visibilité d'une session. Seule une session peut en modifier sa visibilité.

| Paramètre | Type | Commentaire | |
|---|---|---|---|
| refSession | Paramètre obligatoire | Référence de la session | |
| Visibilité | Paramètre obligatoire | Visibilité donnée sur la session | |
| | | Valeurs possibles : | |
| | | | PUB : la session est visible par toutes les autres sessions. |
| | | | PRIV : la session n'est visible que par les canaux d'une même session. |
| | Valeur de retour | Référence sur la session | |
| | | Ou | |
| | | "NULL" si une erreur est rencontrée (par exemple, émise par une autre session). | |

### 4) Modifications d'informations sur une session

La fonction « setSessionInfo » permet de modifier les informations sur une session de visibilité de type « PUB ».

| Paramètre | Type | Commentaire |
|---|---|---|
| refSession | Paramètre obligatoire | Référence de la session |
| refInfo | Paramètre obligatoire | Référence sur les informations de la session |
| | Valeur de retour | Référence sur les informations de la session |
| | | Si une erreur est rencontrée, la valeur de retour est "NULL" |

### 5) Obtention d'informations sur une session

La fonction « getSessionInfo » permet d'obtenir des informations sur une session de visibilité de type « PUB ».

| Paramètre | Type | Commentaire |
|---|---|---|
| refSession | Paramètre obligatoire | Référence de la session |
| | Valeur de retour | Référence sur les informations de la session (contenant sa visibilité, le nombre de canaux visibles, ...). |
| | | Si une erreur est rencontrée, la valeur de retour est null |

### 6) Déréférencement d'une session

La fonction « unregisterSession » permet de déréférencer une session.

| Paramètre | Type | Commentaire |
|---|---|---|
| refSession | Paramètre obligatoire | Référence de la session |
| | Valeur de retour | Si la session n'a plus de canaux rattachés, la valeur de retour est la référence de la session qui vient d'être supprimée. |
| | | Sinon, la valeur de retour est "NULL" |

### B) Fonctionnalités de niveau « canal »

### 1) Enregistrement d'un canal:

La fonction « registerChannel » permet d'enregistrer un canal référencé.

| Paramètre | Type | Commentaire | |
|---|---|---|---|
| refSession | Paramètre obligatoire | Référence de la session à laquelle appartient le canal | |
| Visibilité | Paramètre obligatoire | Visibilité donnée sur le canal. | |
| | | Valeurs possibles : | |
| | | | PUB : le canal est visible par tous les autres canaux, quelle que soit la session. |
| | | | PROT : le canal est visible par tous les autres canaux de la session. |
| | | | PRIV : le canal n'est visible par aucun autre canal. |
| | | Si un canal appartient à une session privée, il ne sera pas visible des autres sessions quels que soient les droits attachés au canal. | |
| | | En d'autres termes, les droits de niveau session priment sur les droits de niveau canal. | |
| idChannel | Paramètre obligatoire | Identifiant du canal. Le format de cette information est libre. Il peut par exemple prendre les valeurs 1,2,3, ... ou Web, Vocal, TV,... | |
| | Valeur de retour | Référence sur le nouveau canal enregistré | |
| | | ou | |
| | | "NULL" si une erreur est rencontrée (problème de droits ou de création) | |

### 2) Obtention de la liste des canaux visibles

La fonction « getListChannel » permet d'obtenir la liste des références des canaux enregistrés avec une visibilité de type « PUB ».

| Paramètre | Type | Commentaire |
|---|---|---|
| refChannel | Paramètre obligatoire | Référence de la session |
| | Valeur de retour | Liste des références des canaux ayant une visibilité de type « PUB » ou "NULL" en cas d'erreur. |

### 3) Modification de la visibilité d'un canal

La fonction « setChannelScope » permet de mettre à jour la visibilité d'un canal.

| Paramètre | Type | Commentaire | |
|---|---|---|---|
| refChannel | Paramètre obligatoire | Référence du canal | |
| Visibilité | Paramètre obligatoire | Visibilité donnée sur le canal. | |
| | | Valeurs possibles : | |
| | | | PUB : le canal est visible par tous les autres canaux, quelle que soit la session |
| | | | PROT: le canal est visible par tous les autres canaux de la session. |
| | | | private : le canal n'est pas visible par les autres canaux de la même session. |
| | Valeur de retour | Référence sur le canal | |
| | | ou | |
| | | "NULL" si une erreur est rencontrée (problème de droits ou de visibilité) | |

### 4) Modification d'informations sur une session

La fonction « setChannelInfo » permet de modifier les informations associées à un canal de visibilité de type « PUB ».

| Paramètre | Type | Commentaire |
|---|---|---|
| refChannel | Paramètre obligatoire | Référence du canal |
| refInfo | Paramètre obligatoire | Référence sur les informations du canal |
| | Valeur de retour | Référence sur les informations du canal ou "NULL" en cas d'erreur |

### 5) Obtention d'informations sur un canal

La fonction « getChannelInfo » permet d'obtenir des informations sur un canal d'une session.

| Paramètre | Type | Commentaire |
|---|---|---|
| refChannel | Paramètre obligatoire | Référence du canal |
| | Valeur de retour | Référence sur les informations du canal (contenant le scope, le type de canal, ...) |
| | | ou |
| | | "NULL" en cas d'erreur |

### 6) Déréférencement d'un canal

La fonction « unregisterChannel » permet de déréférencer un canal d'une session.

| Paramètre | Type | Commentaire |
|---|---|---|
| refChannel | Paramètre obligatoire | Référence du canal |
| | Valeur de retour | Référence du canal qui vient d'être supprimé |
| | | ou |
| | | "NULL" en cas d'erreur |

### C) Fonctionnalités de niveau « données ».

### 1) Enregistrement d'une donnée

### a) Enregistrement d'une donnée de niveau session:

La fonction « registerSessionData » permet d'enregistrer une donnée de niveau session.

| Paramètre | Type | Commentaire | |
|---|---|---|---|
| refSession | Paramètre obligatoire | Référence de la session | |
| Visibilité | Paramètre obligatoire | Visibilité sur la donnée : | |
| | | | PUB : la donnée est visible par tous. |
| | | | PROT : la donnée n'est visible que par les canaux de la même session. |
| | | | PRIV : la donnée n'est pas visible par les autres sessions, ni par les autres canaux de la même session. |
| | | | |
| | | Si une donnée de niveau session appartient à une session privée ou protégée, elle ne sera pas visible des autres sessions quels que soient les droits attachés à la donnée. En d'autres termes, la visibilité de niveau session prime sur la visibilité de niveau donnée. | |
| Droits | Paramètre obligatoire | Droits de manipulation sur la donnée Valeurs possibles : | |
| | | | RW : la donnée est accessible en lecture et en écriture. |
| | | | R : la donnée n'est accessible qu'en lecture. |
| | | | W : la donnée n'est accessible qu'en écriture. |
| idData | Paramètre obligatoire | Identifiant de la donnée. Le format de cette information est libre (chaîne de caractères). | |
| | Valeur de retour | Référence sur la donnée enregistrée | |
| | | ou | |
| | | "NULL" si une erreur est rencontrée (problème de compatibilité de visibilité ou de droits ou lors de création). | |

### b) Enregistrement d'une donnée de niveau canal:

La fonction « registerChannelData » permet d'enregistrer une donnée de niveau canal (pour une session donnée).

| Paramètre | Type | Commentaire | |
|---|---|---|---|
| refChannel | Paramètre obligatoire | Référence du canal | |
| Visibilité | Paramètre obligatoire | Visibilité sur la donnée : | |
| | | | PUB : la donnée est visible par tous. |
| | | | PROT : la donnée n'est visible que par les canaux de la même session. |
| | | | PRIV : la donnée n'est pas visible par les autres sessions, ni par les autres canaux de la même session. |
| | | | |
| | | Si une donnée de niveau canal appartient à une session privée ou protégée, elle ne sera pas visible des autres sessions quels que soient les droits attachés à la donnée. En d'autres termes, la visibilité de niveau session prime sur la visibilité de niveau donnée. | |
| Droits | Paramètre obligatoire | Droits de manipulation sur la donnée Valeurs possibles : | |
| | | | RW : la donnée est accessible en lecture et en écriture. |
| | | | R : la donnée n'est accessible qu'en lecture. |
| | | | W : la donnée n'est accessible qu'en écriture. |
| idData | Paramètre obligatoire | Identifiant de la donnée. Le format de cette information est libre (chaîne de caractères). | |
| | Valeur de retour | Référence sur la donnée enregistrée | |
| | | ou | |
| | | "NULL" si une erreur est rencontrée (problème de compatibilité de visibilité ou de droits ou lors de création) | |

### 2) Modification de la visibilité d'une donnée

La fonction « setDataScope » permet de modifier la visibilité d'une donnée.

| Paramètre | Type | Commentaire | |
|---|---|---|---|
| refData | Paramètre obligatoire | Référence de la donnée | |
| Visibilité | Paramètre obligatoire | Visibilité sur la donnée : | |
| | | | PUB : la donnée est visible par tous. |
| | | | PROT : la donnée n'est visible que par les canaux de la même session. |
| | | | PRIV : la donnée n'est pas visible par les autres sessions, ni par les autres canaux de la même session. |
| | | Pour modifier la visibilité d'une donnée, un canal doit disposer des droits en écriture sur la donnée. | |
| | Valeur de retour | Référence sur la donnée | |
| | | ou | |
| | | "NULL" si une erreur est rencontrée (problème de compatibilité de visibilité ou de droits) | |

### 3) Modification des droits associés à une donnée

La fonction « setDataRghts » permet de modifier les droits associés à une donnée.

| Paramètre | Type | Commentaire | |
|---|---|---|---|
| ref Data | Paramètre obligatoire | Référence de la donnée | |
| Droits | Paramètre obligatoire | Droits de manipulation sur la donnée Valeurs possibles : | |
| | | | RW : la donnée est accessible en lecture et en écriture. |
| | | | R : la donnée n'est accessible qu'en lecture. |
| | | | W : la donnée n'est accessible qu'en écriture. |
| | Valeur de retour | Référence sur la donnée | |
| | | ou | |
| | | "NULL" si une erreur est rencontrée (problème de compatibilité de visibilité ou de droits) | |

### 4) Modification de la valeur d'une donnée

La fonction « setData » permet de modifier la valeur d'une donnée.

| Paramètre | Type | Commentaire |
|---|---|---|
| ref Data | Paramètre obligatoire | Référence de la donnée. |
| data | Paramètre obligatoire | Référence sur la valeur de la donnée. |
| | Valeur de retour | Référence sur la donnée |
| | | ou |
| | | "NULL" si une erreur est rencontrée (problème de compatibilité de visibilité ou de droits ou lors de création). |

### 5) Obtention d'informations sur une donnée

La fonction « getDataInfo » permet d'obtenir des informations sur une donnée. Cette donnée doit être associée à une visibilité de type « PUB ».

| Paramètre | Type | Commentaire |
|---|---|---|
| refData | Paramètre obligatoire | Référence de la donnée. |
| | Valeur de retour | Référence sur les informations de la donnée (contenant le propriétaire, la visibilité et les droits d'accès, ...) |
| | | ou "NULL" en cas d'erreur (problème de compatibilité de visibilité ou de droits). |

### 6) Obtention de la valeur d'une donnée

La fonction « getData » permet d'obtenir la valeur d'une donnée

| Paramètre | Type | Commentaire |
|---|---|---|
| refData | Paramètre obligatoire | Référence de la donnée. |
| | Valeur de retour | Référence sur la valeur de la donnée |
| | | ou |
| | | "NULL" en cas d'erreur (problème de compatibilité de visibilité ou de droits). |

### 7) Obtention de la liste des données visibles

### a) Obtention de la liste des données visibles de niveau session:

La fonction « getListSessionData » permet d'obtenir la liste des références des données visibles enregistrées pour une session. La visibilité de la session à laquelle appartient cette donnée doit être de type "PUB".

| Paramètre | Type | Commentaire |
|---|---|---|
| refSession | Paramètre obligatoire | Référence de la session. |
| | Valeur de retour | Liste de références sur les données visibles |
| | | ou |
| | | "NULL" en cas d'erreur (problème de compatibilité de visibilité ou de droits). |

### b) Obtention de la liste des données visibles de niveau canal

La fonction « getListChannelData » permet d'obtenir la liste des références des données visibles enregistrées pour un canal.

La visibilité de la session à laquelle appartient cette donnée doit être de type « PUB » ou « PROT ».

| Paramètre | Type | Commentaire |
|---|---|---|
| ref Channel | Paramètre obligatoire | Référence du canal. |
| | Valeur de retour | Liste de références sur les données visibles |
| | | ou |
| | | "NULL" en cas d'erreur (problème de compatibilité de visibilité ou de droits). |

### 8) Déréférencement d'une donnée

La fonction « unregisterData » permet de déréférencer une donnée.

| Paramètre | Type | Commentaire |
|---|---|---|
| refData | Paramètre obligatoire | Référence de la donnée. |
| | Valeur de retour | Référence de la donnée qui vient d'être supprimé |
| | | ou |
| | | "NULL" en cas d'erreur (problème de compatibilité de visibilité ou de droits). |

## Revendications

1. Unité de gestion (20) d'au moins un premier canal (Cₗ) appartenant à une session (Sⱼ) d'accès à un service dans un réseau (1) de télécommunications, ladite unité (20) de gestion comportant :
- des moyens (16) pour définir et enregistrer un attribut de visibilité (V(Cₗ)) associé audit au moins un premier canal (Cₗ), les attributs de visibilité V(Cₗ) dudit premier canal Cₗ pouvant être de trois types, à savoir :
- "public" (PUB), auquel cas ledit premier canal (Cₗ) est visible par toutes les autres sessions ;
- "protégé" (PROT), auquel cas ledit premier canal (Cⱼ) est visible par les canaux de la même session que ce canal ; et
- "privé" (PRIV), auquel cas ledit premier canal (Cⱼ) n'est visible ni par les autres sessions, ni par les autres canaux de la même session ;
- des moyens (14) pour recevoir, en provenance d'un deuxième canal, une requête (getChannelInfo) pour obtenir des informations sur ledit premier canal (Cₗ) ; et
- des moyens (14) pour envoyer une réponse à ladite requête (getChannelInfo), en prenant en compte l'attribut de visibilité (V(Cₗ)) associé audit premier canal (Cₗ).
la session à laquelle appartient ledit premier canal (Cₗ) et la session (Sⱼ) laquelle appartient ledit deuxième canal (Cₗ).

2. Unité de gestion (20) selon la revendication 1, dans laquelle au moins deux sessions (Sⱼ, Sⱼ) permettent d'accéder audit service, **caractérisée en ce qu'**elle comporte :
- des moyens (16) pour enregistrer un attribut de visibilité (V(Sⱼ)) associé à une dite session (Sⱼ) ;
- des moyens (14) pour recevoir une requête (getSessionInfo) pour obtenir des informations sur une session (Sⱼ) ; et
- des moyens (14) pour envoyer une réponse à ladite requête, en prenant en compte l'attribut de visibilité (V(Sⱼ)) associé à ladite session (Sₗ).

3. Unité de gestion (20) selon la revendication 2, **caractérisée en ce que** la réponse à ladite requête d'obtention d'information sur ledit premier canal (Cₗ) (getChannelInfo) prend en compte l'attribut de visibilité (V(Sⱼ)) associé à la session (Sⱼ) à laquelle appartient ledit premier canal (Cₗ) et un ensemble de règles (15).

4. Unité de gestion (20) selon l'une quelconque des revendications 1 à 3, **caractérisée en ce qu'**elle comporte :
- des moyens (16) pour enregistrer un attribut de visibilité (V(Dₖ)) associé à au moins une donnée (Dₖ) ;
- des moyens (14) pour recevoir une requête (getDataInfo) pour obtenir des informations sur une donnée (Dₖ) ; et
- des moyens (14) pour envoyer une réponse à ladite requête, en prenant en compte l'attribut de visibilité (V(Dₖ)) associé à ladite donnée (Dₖ).

5. Unité de gestion (20) selon la revendication 4, **caractérisée en ce qu'**elle comporte :
- des moyens (16) pour enregistrer un droit (R(Dₖ)) de lecture et/ou écriture associé à au moins une donnée (Dₖ) ;
- des moyens (14) pour recevoir une requête (setData) pour lire ou modifier ladite donnée (Dₖ) ; et
- des moyens (14) pour envoyer une réponse à ladite requête, en prenant en compte le droit (R(Dₖ)) et l'attribut de visibilité (V(Dₖ)) associés à ladite donnée (Dₖ).

6. Unité de gestion (20) selon la revendication 4 ou la revendication 5, dans laquelle ladite donnée (Dₖ) est rattachée à un canal (Cₗ), **caractérisée en ce que** la réponse à ladite requête d'obtention d'information sur ladite donnée (Dₖ) (getDataInfo) prend en compte l'attribut de visibilité (V(Cₗ)) associé audit canal (Cₗ) et un ensemble de règles (15).

7. Unité de gestion (20) selon la revendication 4 ou la revendication 5, dans laquelle ladite donnée (Dₖ) est rattachée à une session (Sⱼ), **caractérisée en ce que** la réponse à ladite requête d'obtention d'information sur ladite donnée (Dₖ) (getDataInfo) prend en compte l'attribut de visibilité (V(Sⱼ)) associé à ladite session (Sⱼ) et un ensemble de règles (15).

8. Unité de gestion (20) selon la revendication 6 ou 7, dans laquelle la réponse à ladite requête d'obtention d'information sur ladite donnée (Dₖ) (getDataInfo) prend en compte la session (Sⱼ) à laquelle est rattachée ladite donnée (Dₖ) et la session dont provient cette requête (getDataInfo).

9. Procédé de gestion d'au moins un premier canal (Cₗ) appartenant à une session (Sⱼ) d'accès à un service dans un réseau de télécommunications, ledit procédé de gestion comportant :
- une étape (E20) de définition et d'enregistrement d'un attribut de visibilité (V(Cₗ)) associé audit au moins un premier canal (Cₗ), les attributs de visibilité V(Cₗ) dudit premier canal Cₗ pouvant être de trois types, à savoir :
- "public" (PUB), auquel cas ledit premier canal (Cⱼ) est visible par toutes les autres sessions ;
- "protégé" (PROT), auquel cas ledit premier canal (Cₗ) est visible par les canaux de la même session que ce canal ; et
- "privé" (PRIV), auquel cas ledit premier canal (Cₗ) n'est visible ni par les autres sessions, ni par les autres canaux de la même session ;
- une étape (E10) de réception, en provenance d'un deuxième canal, d'une première requête (getChannelInfo) pour obtenir des informations (I(Cₗ)) sur ledit premier canal (Cₗ) ; et
- une étape (E60) d'envoi d'une réponse à ladite première requête (getChannelInfo), en prenant en compte l'attribut de visibilité (V(Cₗ)) associé audit premier canal (Cₗ), la session à laquelle appartient ledit premier canal (Cₗ) et la session (Sⱼ) laquelle appartient ledit deuxième canal (Cₗ).

10. Programme d'ordinateur comportant des instructions pour l'exécution des étapes du procédé de gestion selon la revendication 9 lorsque ledit programme est exécuté par un ordinateur.

11. Support d'enregistrement (13) lisible par un ordinateur (20) sur lequel est enregistré un programme d'ordinateur comprenant des instructions pour l'exécution des étapes du procédé de gestion selon la revendication 9.

## Claims

1. Unit (20) for managing at least one first channel (Cᵢ) belonging to an access session (Sⱼ) to a service in a telecommunications network (1), said management unit (20) comprising:
- means (16) for defining and storing a visibility attribute (V(Cᵢ)) associated with said at least one first channel (Cᵢ), the visibility attributes V(Cᵢ) of said first channel Cᵢ being able to be of three types, namely:
- "public" (PUB), in which case said first channel (Cᵢ) is visible via all the other sessions;
- "protected" (PROT), in which case said first channel (Cᵢ) is visible via the channels of the same session as this channel; and
- "private" (PRIV), in which case said first channel (Cᵢ) is visible neither via the other sessions nor via the other channels of the same session;
- means (14) for receiving, from a second channel, a request (getChannelInfo) to obtain information concerning said first channel (Cᵢ); and
- means (14) for sending a response to said request (getChannelInfo), by taking into account the visibility attribute (V(Cᵢ)) associated with said first channel (Cᵢ), the session to which said first channel (Cᵢ) belongs and the session (Sⱼ) to which said second channel (Cᵢ) belongs.

2. Management unit (20) according to Claim 1, in which at least two sessions (Sⱼ, Sⱼ) allow access to said service, **characterized in that** it comprises:
- means (16) for storing a visibility attribute (V(Sⱼ)) associated with a said session (Sⱼ);
- means (14) for receiving a request (getSessionInfo) to obtain information concerning a session (Sⱼ) ; and
- means (14) for sending a response to said request, by taking into account the visibility attribute (V(Sⱼ)) associated with said session (Sⱼ).

3. Management unit (20) according to Claim 2, **characterized in that** the response to said request to obtain information concerning said first channel (Cᵢ) (getChannelInfo) takes into account the visibility attribute (V(Sⱼ)) associated with the session (Sⱼ) to which said first channel (Cᵢ) belongs and a set of rules (15).

4. Management unit (20) according to any one of Claims 1 to 3, **characterized in that** it comprises:
- means (16) for storing a visibility attribute (V(Dₖ)) associated with at least one datum (Dₖ);
- means (14) for receiving a request (getDataInfo) to obtain information concerning a datum (Dₖ) ; and
- means (14) for sending a response to said request, by taking into account the visibility attribute (V(Dₖ)) associated with said datum (Dₖ).

5. Management unit (20) according to Claim 4, **characterized in that** it comprises:
- means (16) for storing a read and/or write permission (R(Dₖ)) associated with at least one datum (Dₖ) ;
- means (14) for receiving a request (setData) to read or modify said datum (Dₖ); and
- means (14) for sending a response to said request, by taking into account the permission (R(Dₖ)) and the visibility attribute (V(Dₖ)) associated with said datum (Dₖ).

6. Management unit (20) according to Claim 4 or Claim 5, in which said datum (Dₖ) is attached to a channel (Cᵢ), **characterized in that** the response to said request to obtain information concerning said datum (Dₖ) (getDataInfo) takes into account the visibility attribute (V(Cᵢ)) associated with said channel (Cᵢ) and a set of rules (15).

7. Management unit (20) according to Claim 4 or Claim 5, in which said datum (Dₖ) is attached to a session (Sⱼ), **characterized in that** the response to said request to obtain information concerning said datum (Dₖ) (getDataInfo) takes into account the visibility attribute (V(Sⱼ)) associated with said session (Sⱼ) and a set of rules (15).

8. Management unit (20) according to Claim 6 or 7, in which the response to said request to obtain information concerning said datum (Dₖ) (getDataInfo) takes into account the session (Sⱼ) to which said datum (Dₖ) is attached and the session from which this request (getDataInfo) originates.

9. Method for managing at least one first channel (Cᵢ) belonging to an access session (Sⱼ) to a service in a telecommunications network, said management method comprising:
- a step (E20) of defining and storing a visibility attribute (V(Cᵢ) associated with said at least one first channel (Cᵢ), the visibility attributes V(Cᵢ) of said first channel Cᵢ being able to be of three types, namely:
- "public" (PUB), in which case said first channel (Cᵢ) is visible via all the other sessions;
- "protected" (PROT), in which case said first channel (Cᵢ) is visible via the channels of the same session as this channel; and
- "private" (PRIV), in which case said first channel (Cᵢ) is visible neither via the other sessions nor via the other channels of the same session;
- a step (E10) of receiving, from a second channel, a first request (getChannelInfo) to obtain information (I(Cᵢ)) concerning said first channel (Cᵢ) ; and
- a step (E60) of sending a response to said first request (getChannelInfo), by taking into account the visibility attribute (V(Cᵢ)) associated with said first channel (Cᵢ), the session to which said first channel (Cᵢ) belongs and the session (Sⱼ) to which said second channel (Cᵢ) belongs.

10. Computer program comprising instructions for executing the steps of the management method according to Claim 9 when said program is run by a computer.

11. Storage medium (13) that can be read by a computer (20) on which is stored a computer program comprising instructions for executing the steps of the management method according to Claim 9.

## Patentansprüche

1. Einheit (20) zum Steuern wenigstens eines ersten Kanals (Cᵢ), der zu einer Sitzung (Sⱼ) für den Zugriff auf einen Dienst in einem Telekommunikationsnetz (1) gehört, wobei die Steuereinheit (20) Folgendes umfasst:
- Mittel (16), um ein Sichtbarkeitsattribut (V(Cᵢ)), das dem wenigstens einen ersten Kanal (Cᵢ) zugeordnet ist, zu definieren und zu registrieren, wobei die Sichtbarkeitsattribute V(Cᵢ) des ersten Kanals Cᵢ von drei Typen sein können, nämlich:
- "öffentlich" (PUB), wobei in diesem Fall der erste Kanal (Cᵢ) für alle anderen Sitzungen sichtbar ist;
- "geschützt" (PROT), wobei in diesem Fall der erste Kanal (Cᵢ) für die Kanäle derselben Sitzung wie dieser Kanal sichtbar ist; und
- "privat" (PRIV), wobei in diesem Fall der erste Kanal (Cᵢ) weder für die anderen Sitzungen noch für die anderen Kanäle derselben Sitzung sichtbar ist;
- Mittel (14), um eine von einem zweiten Kanal stammende Anforderung (getChannelInfo) zu empfangen, um Informationen über den ersten Kanal (Cᵢ) zu erhalten; und
- Mittel (14), um eine Antwort auf die Anforderung (getChannelInfo) zu schicken, indem das Sichtbarkeitsattribut (V(Cᵢ)), das dem ersten Kanal (Cᵢ) zugeordnet ist, die Sitzung, zu der der erste Kanal (Cᵢ) gehört, und die Sitzung (Sⱼ), zu der der zweite Kanal (Cᵢ) gehört, berücksichtigt werden.

2. Steuereinheit (20) nach Anspruch 1, wobei wenigstens zwei Sitzungen (Sⱼ, Sⱼ) ermöglichen, auf den Dienst zuzugreifen, **dadurch gekennzeichnet dass** sie Folgendes umfasst:
- Mittel (16), um ein Sichtbarkeitsattribut (V(Sⱼ)), das einer solchen Sitzung (Sⱼ) zugeordnet ist, aufzuzeichnen;
- Mittel (14), um eine Anforderung (getSessionInfo) zu empfangen, um Informationen über eine Sitzung (Sⱼ) zu erhalten; und
- Mittel (14), um eine Antwort auf die Anforderung zu schicken, indem das Sichtbarkeitsattribut (V(Sⱼ)), das dieser Sitzung (Sⱼ) zugeordnet ist, berücksichtigt wird.

3. Steuereinheit (20) nach Anspruch 2, **dadurch gekennzeichnet, dass** die Antwort auf die Anforderung zum Erhalten von Informationen über den ersten Kanal (Cᵢ) (getChannelInfo) das Sichtbarkeitsattribut (V(Sⱼ)), das der Sitzung (Sⱼ) zugeordnet ist, zu der der erste Kanal (Cᵢ) gehört, und eine Gesamtheit von Regeln (15) berücksichtigt.

4. Steuereinheit (20) nach einem der Ansprüche 1 bis 3, **dadurch gekennzeichnet, dass** sie Folgendes umfasst:
- Mittel (16), um ein Sichtbarkeitsattribut (V(Dₖ)), das wenigstens einer Dateneinheit (Dₖ) zugeordnet ist, aufzuzeichnen;
- Mittel (14), um eine Anforderung (getDataInfo) zu empfangen, um Informationen über eine Dateneinheit (Dₖ) zu erhalten; und
- Mittel (14), um eine Antwort auf die Anforderung zu schicken, indem das Sichtbarkeitsattribut (V(Dₖ)), das der Dateneinheit (Dₖ) zugeordnet ist, berücksichtigt wird.

5. Steuereinheit (20) nach Anspruch 4, **dadurch gekennzeichnet, dass** sie Folgendes umfasst:
- Mittel (16), um ein Recht (R(Dₖ)) zum Lesen und/oder Schreiben, das der wenigstens einen Dateneinheit (Dₖ) zugeordnet ist, aufzuzeichnen;
- Mittel (14), um eine Anforderung (setData) zum Lesen oder Modifizieren der Dateneinheit (Dₖ) zu empfangen; und
- Mittel (14), um eine Antwort auf die Anforderung zu schicken, indem das Recht (R(Dₖ)) und das Sichtbarkeitsattribut (V(Dₖ)), die der Dateneinheit (Dₖ) zugeordnet sind, berücksichtigt werden.

6. Steuereinheit (20) nach Anspruch 4 oder Anspruch 5, wobei die Dateneinheit (Dₖ) an einen Kanal (Cᵢ) gebunden ist, **dadurch gekennzeichnet, dass** die Antwort auf die Anforderung zum Erhalten von Informationen über die Dateneinheit (Dₖ) (getDataInfo) das Sichtbarkeitsattribut (V(Cᵢ)), das dem Kanal (Cᵢ) zugeordnet ist, und eine Gesamtheit von Regeln (15) berücksichtigt.

7. Steuereinheit (20) nach Anspruch 4 oder Anspruch 5, wobei die Dateneinheit (Dₖ) an eine Sitzung (Sⱼ) gebunden ist, **dadurch gekennzeichnet, dass** die Antwort auf die Anforderung zum Erhalten von Informationen über die Dateneinheit (Dₖ) (getDataInfo) das Sichtbarkeitsattribut (V(Sⱼ)), das der Sitzung (Sⱼ) zugeordnet ist, und eine Gesamtheit von Regeln (15) berücksichtigt.

8. Steuereinheit (20) nach Anspruch 6 oder 7, wobei die Antwort auf die Anforderung zum Erhalten von Informationen über die Dateneinheit (Dₖ) (getDataInfo) die Sitzung (Sⱼ), an die die Dateneinheit (Dₖ) gebunden ist, und die Sitzung, von der diese Anforderung (getDataInfo) stammt, berücksichtigt.

9. Verfahren zum Steuern wenigstens eines ersten Kanals (Cᵢ) , der zu einer Sitzung (Sⱼ) für den Zugriff auf einen Dienst in einem Telekommunikationsnetz gehört, wobei das Steuerverfahren Folgendes umfasst:
- einen Schritt (E20) zum Definieren und Aufzeichnen eines Sichtbarkeitsattributs (V(Cᵢ)), das dem wenigstens einen ersten Kanal (Cᵢ) zugeordnet ist, wobei die Sichtbarkeitsattribute V(Cᵢ) des ersten Kanals (Cᵢ) von drei Typen sein können, nämlich:
- "öffentlich" (PUB), wobei in diesem Fall der erste Kanal (Cᵢ) für alle anderen Sitzungen sichtbar ist;
- "geschützt" (PROT), wobei in diesem Fall der erste Kanal (Cᵢ) für die Kanäle derselben Sitzung wie dieser Kanal sichtbar ist; und
- "privat" (PRIV), wobei in diesem Fall der erste Kanal (Cᵢ) weder für die anderen Sitzungen noch für die anderen Kanäle derselben Sitzung sichtbar ist;
- einen Schritt (E10) zum Empfangen einer ersten Anforderung (getChannelInfo), die von einem zweiten Kanal stammt, um Informationen (I(Cᵢ)) über den ersten Kanal (Cᵢ) zu erhalten; und
- einen Schritt (E60) zum Schicken einer Antwort auf die erste Anforderung (getChannelInfo), indem das Sichtbarkeitsattribut (V(Cᵢ)), das dem ersten Kanal (Cᵢ) zugeordnet ist, die Sitzung, zu der der erste Kanal (Cᵢ) gehört, und die Sitzung (Sⱼ), zu der der zweite Kanal (Cᵢ) gehört, berücksichtigt werden.

10. Computerprogramm, das Befehle enthält, um die Schritte des Steuerverfahrens nach Anspruch 9 auszuführen, wenn das Programm von einem Computer ausgeführt wird.

11. Aufzeichnungsträger (13), der von einem Computer (20) lesbar ist und auf dem ein Computerprogramm aufgezeichnet ist, das Befehle enthält, um die Schritte des Steuerverfahrens nach Anspruch 9 auszuführen.
